# EUROPÄISCHE PATENTSCHRIFT

(11) **EP 0 968 967 B1**
(45) Veröffentlichungstag und Bekanntmachung des Hinweises auf die Patenterteilung: **30.01.2002**
(21) Anmeldenummer: 99112342.3
(22) Anmeldetag: 28.06.1999
(51) Int. Cl.: C02F 11/12

(54) **Behältervorrichtung zum Entwässern von Schlämmen**
Container for dewatering sludge
Conteneur pour la déshydratation de boues

(30) Priorität: 02.07.1998 DE 29811775 U
(43) Veröffentlichungstag der Anmeldung: 05.01.2000
(73) Patentinhaber: Höninger, Josef, 88521 Ertingen (DE)
(72) Erfinder: Höninger, Josef, 88521 Ertingen (DE)
(74) Vertreter: Petra, Elke, Dipl.-Ing.

(56) Entgegenhaltungen:
- DE-A- 3 004 682
- US-A- 5 595 654
- PATENT ABSTRACTS OF JAPAN vol. 005, no. 067 (C-053), 7. Mai 1981 (1981-05-07) -& JP 56 017608 A (SATO MIKIKO), 19. Februar 1981 (1981-02-19)

## Beschreibung

Die Erfindung betrifft eine Behältervorrichtung zum Entwässern von Schlämmen oder von Schutt, mit einer Filtereinrichtung zum Trennen der Schlämme oder des Schutts in ein flüssiges Filtrat und feste Reststoffe, sowie einer verschließbaren Ablaßeinrichtung für das Filtrat.

Schlämme und feuchte Schutte werden zum Zweck der Entsorgung häufig zu zentralen Deponien transportiert. Aus ökonomischen Gründen ist es dabei sinnvoll Vorkehrungen dafür zu treffen, daß die in die Deponien gebrachten Schlämme einen möglichst geringen Wassergehalt auf weisen. Behältervorrichtungen der eingangs genannten Art werden deshalb im Stand der Technik dazu verwendet, Schlämme zu zentralen Deponien zu transportieren und über die verschließbare Ablaßeinrichtung das flüssige Filtrat von den festen Reststoffen zu trennen, um es entweder im Boden zu versickern oder getrennt zu entsorgen. Die herkömmlichen Behältervorrichtungen weisen jedoch den Nachteil auf, daß sie nur mit Hilfe von Spezialfahrzeugen transportierbar sind und nur mittels der Kippeinrichtungen derartiger Spezialfahrzeuge entleerbar sind. Durch die Spezialfahrzeuge fallen dabei regelmäßig hohe Transportkosten an.

Aufgabe der Erfindung ist es, eine Behältervorrichtung zu schaffen, die mit herkömmlichen Fahrzeugen wie beispielsweise Kleintransportern transportierbar ist und mittels herkömmlicher Stapler auf derartige Fahrzeuge aufladbar und von derartigen Fahrzeugen abladbar ist.

Erfindungsgemäß wird diese Aufgabe dadurch gelöst, daß die Behältervorrichtung einen Bodenrahmen mit einer schwenkbaren Bodenklappe enthält, die mittels einer Verschließeinrichtung abdichtend mit dem Behälter verschließbar und zu öffnen ist, und die Filtervorrichtung als auswechselbares Sieb ausgebildet ist.

Bevorzugte Ausführungsformen der Erfindung sind Gegenstand der Unteransprüche.

Bei der erfindungsgemäßen Behältervorrichtung wird durch das Merkmal, daß die Behältervorrichtung einen Behälterrahmen mit einer schwenkbaren Bodenklappe enthält, die mittels einer Verschließeinrichtung abdichtend mit dem Behälter verschließbar und zu öffnen ist, erreicht, daß die erfindungsgemäße Behältervorrichtung zum Zweck des Entleerens der Reststoffe nicht mit einer speziellen Schwenkeinrichtung geschwenkt zu werden braucht, sondern im Gegensatz dazu in vertikaler Positionierung durch Öffnen der Bodenklappe entleerbar ist. Da die erfindungsgemäße Behältervorrichtung somit völlig unabhängig von herkömmlichen Transportfahrzeugen ist, ist sie vorteilhafterweise auch in beliebigen Größen und Dimensionierungen ausführbar.

Es ist somit erfindungsgemäß eine Behältervorrichtung geschaffen, die in mit Schlämmen gefülltem Zustand mittels eines Gabelstaplers anhebbar ist, wobei die schwenkbare Bodenklappe der Behältervorrichtung mittels Öffnens der Verschließeinrichtung zu öffnen ist, wodurch die Reststoffe auf eine Deponie oder in einen anderen Transportbehälter entleerbar sind.

Die Filtereinrichtung der erfindungsgemäßen Behältervorrichtung ist als auswechselbares Sieb ausgebildet. Dadurch wird erreicht, daß für unterschiedliche Schlämme oder feuchte Schutte mit unterschiedlich großen Feststoff-Anteilen jeweils angepaßte Siebe einsetzbar sind, deren Maschenbreite und Form so bemessen ist, daß die Feststoffe so sicher zurückgehalten werden.

Gemäß einer anderen bevorzugten Ausführungsform der erfindungsgemäßen Behältervorrichtung weist diese Auflageeinrichtungen auf, die so ausgebildet sind, daß eine Mehrzahl von Behältervorrichtungen übereinander stapelbar ist. Dadurch ist eine raumsparende Aufbewahrung sowohl leerer als auch gefüllter Behältervorrichtungen sichergestellt.

Die Verschließeinrichtung der erfindungsgemäßen Behältervorrichtung ist vorzugsweise als Handhebel ausgeführt, der auf eine Schwenkwelle der Bodenklappe wirkt und durch eine Feder derart vorgespannt ist, daß mit dem Hebel zusammenwirkende Einrasteinrichtungen, die an Teile der Bodenklappe angreifen, die Bodenklappe in geschlossenem Zustand halten. Dadurch wird zum einen erreicht, daß die Bodenklappe der erfindungsgemäßen Behältervorrichtung leicht von Hand zu öffnen ist, und zum anderen ist durch die auf den Handhebel einwirkende Feder sichergestellt, daß die Bodenklappe geschlossen bleibt, solange der Handhebel nicht von Hand betätigt wird. Zum anderen ist durch die Winkelposition des Handhebels immer erkennbar, ob die Bodenklappe eingerastet ist oder nicht.

Gemäß einer wichtigen Ausführungsform der erfindungsgemäßen Behältervorrichtung ist die Bodenklappe mit einem doppelten Boden versehen, wobei sie als Auffangwanne für das Filtrat ausgebildet ist. Der obere Boden der Bodenklappe kann dabei als Bodensieb ausgebildet sein. Diese Ausführungsform der erfindungsgemäßen Behältervorrichtung ist insbesondere für solche Schlämme vorteilhaft, die einen hohen Flüssigkeitsanteil aufweisen, bzw. wenn eine der zu trennenden Fraktionen vom spezifischen Gewicht her leichter ist als die andere und somit oben aufschwimmt.

Gemäß bevorzugter Ausführungsform der erfindungsgemäßen Behältervorrichtung sind an den Seitenkanten der Bodenplatte Führungsbleche vorgesehen, die verhindern, daß der Reststoff bzw. die Reststoffe beim Öffnen der Bodenklappe seitlich wegrutschen. Die Seitenkanten der Bodenplatte stehen dabei vorzugsweise senkrecht zur Bodenplatte, jeweils parallel zu den Seitenwänden der Behältervorrichtung, die an die betreffenden Seitenkanten der Bodenplatte angrenzen. Die Höhe der Führungsbleche ist dabei so bemessen, daß eine sichere Führung der Reststoffe beim Abrutschen über die Bodenklappe sichergestellt ist.

Gemäß einer weiteren bevorzugten Ausführungsform der erfindungsgemäßen Behältervorrichtung ist diese mit einem Deckel versehen, mit dem die Behältervorrichtung abgedichtet verschließbar ist. Dadurch wird erreicht, daß die erfindungsgemäße Behältervorrichtung als geschlossener Container transportabel ist und nicht notwendigerweise in aufrechter Lage zu transportieren ist.

Gemäß einer weiteren bevorzugten Ausführungsform der erfindungsgemäßen Behältervorrichtung sind die Seitenwände der Behältervorrichtung sich in Richtung von dem Behälterrahmen fort verjüngend ausgeführt. Dadurch wird erreicht, daß Schlämme oder Schutt besonders leicht aus der Behältervorrichtung entleerbar sind.

Gemäß einer anderen Ausführung der erfindungsgemäßen Behältervorrichtung sind zusätzlich zum Sieb hinter diesem parallel angeordnete Schlingerwände vorgesehen, die eine Mehrzahl von Kammern bilden, in denen sich von dem von dem Sieb gefilterten Filtrat noch vorhandene Reststoffe absetzen. Dadurch wird eine besonders effiziente Reinigung des Filtrats erreicht.

Die erfindungsgemäße Behältervorrichtung wird im folgenden anhand von bevorzugten Ausführungsformen erläutert, die in den Figuren der Zeichnung dargestellt sind. Darin zeigen:
- Fig.1: eine bevorzugte Ausführungsform der erfindungsgemäßen Behältervorrichtung in einer Ansicht von schräg oben;
- Fig.2: die in Fig. 1 dargestellte Behältervorrichtung in einer Ansicht von vorne;
- Fig.3: eine alternative Ausführungsform der erfindungsgemäßen Behältervorrichtung in einer Ansicht von schräg oben.

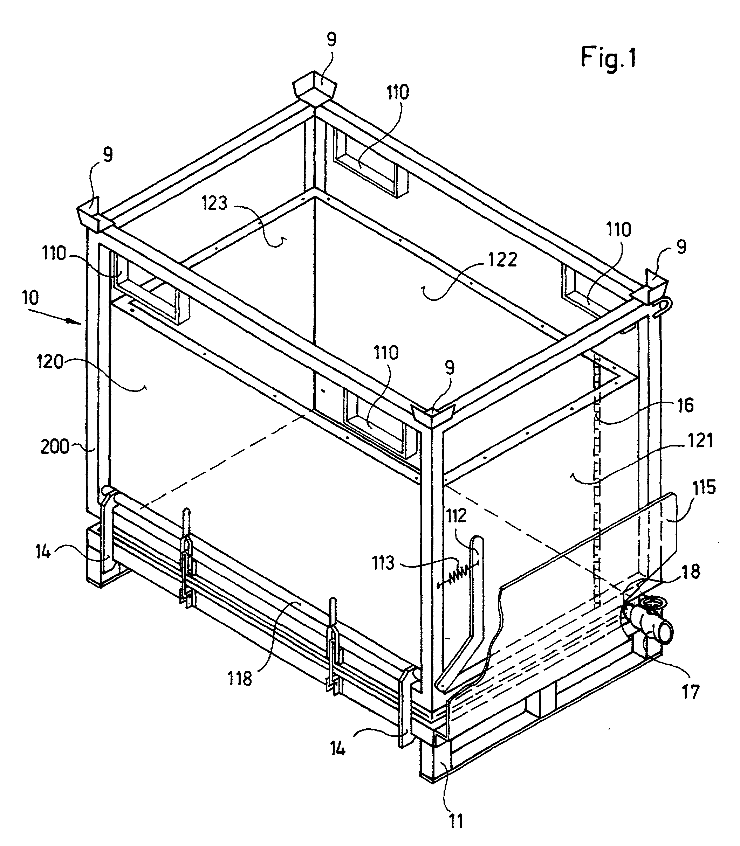

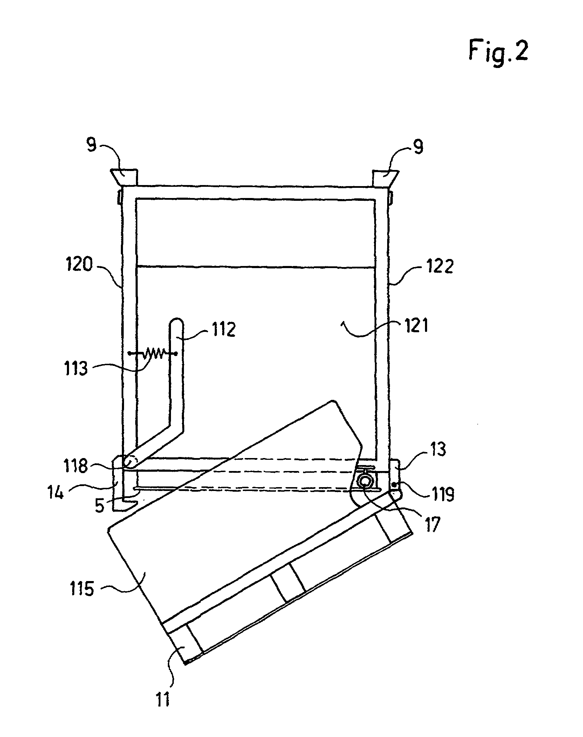

Bei der in den Figuren 1 und 2 dargestellten erfindungsgemäßen Behältervorrichtung 10 mit Seitenwänden 120, 121, 122 und 123 ist eine Bodenklappe 11 über eine Welle 119 mit Scharnieren 13 an einer Seitenwand 122 der Behältervorrichtung 10 angelenkt. Die Seitenwände 120, 121, 122 und 123 bilden dabei einen Behälterrahmen 200. Der Behälterrahmen 200 weist eine Verschließeinrichtung auf, die als Handhebel 112 ausgebildet ist, der auf eine Welle 118 einwirkt, an der eine Mehrzahl von Haken 14 vorgesehen sind, die an diejenigen Teile der Bodenklappe 11 fest angreifen, die der Welle 119 gegenüber liegen. Der Handhebel 112 ist dabei von Hand gegen die Kraft einer Feder 113 so bewegbar, daß die Haken 14 die Bodenklappe 11 freigeben, so daß sich die Bodenklappe bei aufrechter Haltung der Behältervorrichtung 10 durch das Gewicht von in die Behältervorrichtung 10 eingebrachten Schlämmen öffnet. Die Bodenklappe 11 ist in geschlossenem Zustand mittels einer entlang den Kanten der Bodenklappe 11 angeordneten Gummidichtung 5 gegenüber der Behälterrahmen 200 abgedichtet.

Am oberen Teil des Behälterrahmens 200 sind Auflageeinrichtungen 9 vorgesehen, die ein sicheres Stapeln einer Mehrzahl erfindungsgemäßer Behältervorrichtungen 10 übereinander ermöglichen.

Die erfindungsgemäße Behältervorrichtung 10 ist mit einem auswechselbaren Sieb 16 versehen. Durch das Sieb 16 wird eine Trennung der festen Reststoffe von einem flüssigen Filtrat bewirkt, das über eine Ablaßeinrichtung 17 durch ein Auslaufrohr 18 ausleitbar ist.

Die beiden sich gegenüberstehenden Seiten 120 und 122 des Behälterrahmens sind mit Aussparungen 110 versehen, die so bemessen sind, daß die Staplerarme eines Gabelstaplers durch sie einführbar sind, um die insgesamte Behältervorrichtung mittels eines Gabelstaplers anzuheben und zu transportieren. Die Bodenklappe 11 weist zwei Führungsbleche 115 auf, die parallel zu den Seitenflächen 121 und 123 ausgeführt sind und verhindern, daß Reststoffe beim Öffnen der Bodenklappe seitlich wegrutschen.

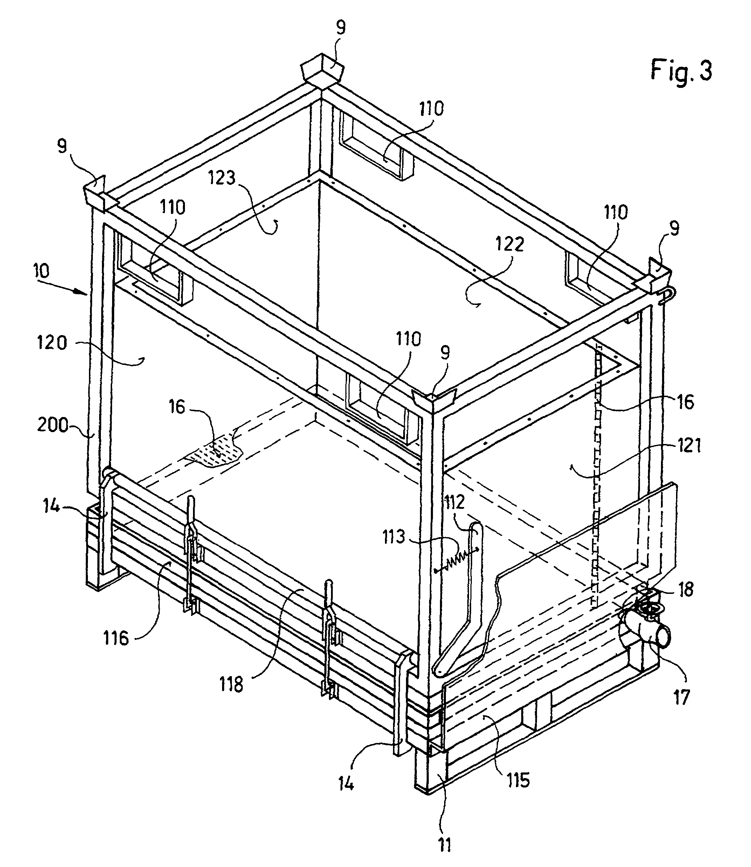

Bei der in Figur 3 dargestellten erfindungsgemäßen Filtervorrichtung ist die Bodenklappe 11 im Gegensatz zu der in Figur 1 dargestellten Bodenklappe 11 mit doppeltem Boden ausgeführt und enthält ein Bodensieb 16 sowie eine Auffangwanne für Filtrat 116. Diese Ausführungsform der erfindungsgemäßen Behältervorrichtung ist insbesondere für solche Schlämme vorgesehen, die einen hohen Anteil an Flüssigkeit aufweisen.

## Patentansprüche

1. Behältervorrichtung (10) zum Entwässern von Schlämmen oder Schutt, mit einer Filtereinrichtung zum Trennen der Schlämme oder des Schuttes in ein flüssiges Filtrat und feste Reststoffe, sowie einer verschließbaren Ablasseinrichtung (17) für das Filtrat, **dadurch gekennzeichnet, dass** die Behältervorrichtung (10) einen Behälterrahmen (200) mit einer schwenkbaren Bodenklappe (11) enthält, die mittels einer Verschließeinrichtung (112) abdichtend mit dem Behälter verschließbar und zu öffnen ist, und die Filtereinrichtung als auswechselbares Sieb (16) ausgebildet ist.

2. Vorrichtung nach einem der vorhergehenden Ansprüche, **dadurch gekennzeichnet, daß** an der Behältervorrichtung Auflageeinrichtungen vorgesehen sind, die so ausgebildet sind, daß eine Mehrzahl von Behältervorrichtungen übereinander stapelbar ist.

3. Vorrichtung nach einem der vorhergehenden Ansprüche, **dadurch gekennzeichnet daß** die Verschließeinrichtung als Handhebel ausgeführt ist, der auf eine Schwenkwelle der Bodenklappe wirkt und durch eine Feder derart vorgespannt ist, daß mit dem Hebel zusammenwirkende Einrasteinrichtungen, die an Teile der Bodenklappe angreifen, die Bodenklappe in geschlossenem Zustand halten.

4. Vorrichtung nach einem der vorhergehenden Ansprüche, **dadurch gekennzeichnet, daß** die Bodenklappe mit einem doppelten Boden versehen ist und als Auffangwanne für das Filtrat ausgebildet ist.

5. Vorrichtung nach einem der vorhergehenden Ansprüche, **dadurch gekennzeichnet, daß** an den Seitenkanten der Bodenplatte Führungsbleche vorgesehen sind, die verhindern, daß der Reststoff beim Öffnen der Bodenklappe seitlich wegrutscht.

6. Vorrichtung nach einem der vorhergehenden Ansprüche, **dadurch gekennzeichnet, daß** ein Deckel vorgesehen ist, mit dem die Behältervorrichtung nach oben abgedichtet verschließbar ist.

7. Vorrichtung nach einem der vorhergehenden Ansprüche, **dadurch gekennzeichnet, daß** die Seitenwände der Behältervorrichtung sich in Richtung von dem Behälterrahmen fort verjüngend ausgeführt sind.

8. Vorrichtung nach Anspruch 1, **dadurch gekennzeichnet, daß** zusätzlich zum Sieb zu diesem parallel angeordnete Schlingerwände vorgesehen sind, die eine Mehrzahl von Kammern bilden, in denen sich in dem von dem Sieb gefilterten Filtrat noch vorhandene Reststoffe absetzen.

## Claims

1. Container device (10) for dewatering sludges or waste, with a filtering arrangement for separating the sludges or waste into a liquid filtrate and solid residues, and a closable outlet arrangement (17) for the filtrate, **characterised in that** the container device (10) comprises a container frame (200) with a pivotable bottom flap (11) which is closable sealingly with the container and openable by means of a closing arrangement (112), and the filtering arrangement is embodied as a replaceable screen (16).

2. Device according to one of the preceding claims, **characterised in that** the container device is provided with supporting arrangements which are embodied so that a plurality of container devices can be stacked one on top of another.

3. Device according to one of the preceding claims, **characterised in that** the closing arrangement is embodied as a hand-operated lever which acts on a pivot shaft of the bottom flap and is preloaded by a spring in such a way that locking arrangements which co-operate with the lever and engage with parts of the bottom flap hold the bottom flap in the closed state.

4. Device according to one of the preceding claims, **characterised in that** the bottom flap is provided with a double bottom and is embodied as a collecting tray for the filtrate.

5. Device according to one of the preceding claims, **characterised in that** the side edges of the bottom plate are provided with guide plates which prevent the residue slipping out sideways when the bottom flap is opened.

6. Device according to one of the preceding claims, **characterised in that** a cover is provided with which the container device can be closed sealingly at the top.

7. Device according to one of the preceding claims, **characterised in that** the side walls of the container device taper away from the container frame.

8. Device according to claim 1, **characterised in that** in addition to the screen, baffle walls are provided which are arranged parallel to the latter and form a plurality of chambers in which residues still present in the filtrate filtered by the screen settle.

## Revendications

1. Conteneur (10) pour la déshydratation de boues ou de gravats, comprenant un dispositif de filtration destiné à séparer les boues ou les gravats en un filtrat liquide et en un résidu solide, ainsi qu'un dispositif (17) qui peut être fermé d'évacuation du filtrat, **caractérisé en ce que** le conteneur (10) comporte un cadre (200) ayant un volet (11) de fond basculant, qui peut être fermé au moyen d'un dispositif (112) de fermeture de manière étanche avec le conteneur et qui peut être ouvert, et le dispositif de filtration est constitué sous la forme d'un tamis (16) qui peut être remplacé.

2. Conteneur suivant la revendication précédente, **caractérisé en ce qu'**il est prévu, sur le conteneur, des dispositifs d'appui qui sont tels qu'une multiplicité de conteneurs peuvent être empilés en superposition.

3. Conteneur suivant l'une des revendications précédentes, **caractérisé en ce que** le dispositif de fermeture est constitué en levier de manipulation, qui agit sur un axe de basculement du volet de fond et qui est mis sous tension préalable par un ressort, de façon que des dispositifs d'encliquetage qui coopèrent avec le levier et qui attaquent des parties du volet de fond maintiennent le volet de fond à l'état fermé.

4. Conteneur suivant l'une des revendications précédentes, **caractérisé en ce que** le volet de fond est muni d'un double fond et est constitué en cuvette de réception du filtrat.

5. Conteneur suivant l'une des revendications précédentes, **caractérisé en ce qu'**il est prévu sur les bords latéraux du plateau formant le fond, des tôles de guidage qui empêchent que le résidu ne glisse latéralement lors de l'ouverture du volet de fond.

6. Conteneur suivant l'une des revendications précédentes, **caractérisé en ce qu'**il est prévu un couvercle par lequel le conteneur peut être fermé d'une manière étanche vers le haut.

7. Conteneur suivant l'une des revendications précédentes, **caractérisé en ce que** les parois latérales du conteneur se rétrécissent en direction du cadre.

8. Conteneur suivant la revendication 1, **caractérisé en ce qu'**il est prévu en plus du tamis des parois à boucle, qui sont disposées parallèlement au tamis et qui forment une multiplicité de chambres dans lesquelles se déposent des résidus encore présents dans le filtrat filtré par le tamis.
